# EUROPEAN PATENT SPECIFICATION

(11) **EP 4 623 348 B1**
(45) Date of publication and mention of the grant of the patent: **29.07.2026**
(21) Application number: 23812861.5
(22) Date of filing: 20.11.2023
(51) Int. Cl.: G05D 1/644, G05D 1/698

(54) **METHOD FOR SWARM FORMATION**
VERFAHREN ZUR SCHWARMBILDUNG
PROCÉDÉ DE FORMATION EN ESSAIM

(30) Priority: 22.11.2022 DE 102022212465
(43) Date of publication of application: 01.10.2025
(73) Proprietor: AUMOVIO Germany GmbH, 60488 Frankfurt am Main (DE)
(72) Inventor: ANDRAE, Andreas, 30175 Hannover (DE); GONZALEZ GONZALEZ, David, 30175 Hannover (DE); GONSA, Osvaldo, 30175 Hannover (DE)
(74) Representative: Aumovio Corporation
(86) International application number: PCT/EP2023/082330
(87) International publication number: WO 2024/110361

(56) References cited:
- WO-A1-2016/069598
- WO-A1-2017/019595
- CN-A- 114 115 354
- US-A1- 2007 168 090

## Description

The present invention relates to a method for distributed swarm formation, concerning the field of connectivity of autonomous operated equipment.

Many industries (e.g., agriculture, manufacturing, military, construction, logistics, etc.) see greater levels of autonomy as a means for improving operational efficiency, potentially also saving resources, such as energy, emissions, and personnel. This is done through what is known as "swarm intelligence", meaning organization for a system of multiple automated entities to emulate the ability of a swarm to exhibit a collective behavior in the face of external stimulus. Swarm farming is a new paradigm for agriculture where swarms of small autonomous platforms create new farming practices, as described by US2018020611A1 or by US2019124910A1, for example. Robots or aerial vehicles may be used to tackle dangerous missions, such as landmines clearance (see CN112946766A) or disaster recovery (as disclosed by US2018217593A1). Swarms of micro air vehicles may perform autonomous surveillance, as disclosed by EP3545381A1.

US 2007168090 A1 describes a system and a method that maintain communication between a plurality of unmanned vehicles within an environment. The system includes a sensor component and an evaluator. The sensor component senses objects within the environment. The sensor component is located on a first unmanned vehicle. The evaluator evaluates data from the sensor component. The evaluator is located on the first unmanned vehicle. The evaluator compares data for the first unmanned vehicle and a second unmanned vehicle and determines whether a trajectory of one of the first and second unmanned vehicles may be modified to maintain communication between the first unmanned vehicle and the second unmanned vehicle.

WO 2016069598 A1 discloses a method of communication link accessibility aware navigation that includes querying a communication link accessibility map based on a location of interest provided by a path planner for a communication node. A communication link accessibility indicator is received representing a communication link characteristic associated with the location of interest in response to querying the communication link accessibility map. A communication link accessibility weight is determined based on a mission priority of maintaining a communication link of the communication node. The communication link accessibility weight is applied to the communication link accessibility indicator.

WO 2017019595 A1 relates to a an Unmanned Aerial Vehicle (UAV). According to the cited patent document, the UAV comprises a situational awareness system coupled to at least one onboard sensor and configured to determine at least one relative spatial location of at least one other UAV; a cooperative Radio Access Network (RAN) signal processor configured to process RAN signals in a UAV-User Equipment (UE) channel cooperatively with at least one other UAV to provide for increased rank of the UAV-UE channel and produce RAN performance criteria; and a flight controller coupled to the situational awareness system and the cooperative RAN signal processor, and configured to employ autonomous navigation control of the UAVs flight based at least on the at least one relative spatial location and the RAN performance criteria operating within predetermined boundaries of navigation criteria, the flight controller being configured to adjust the UAVs position relative to at least one other device in a Cooperative-Multiple Input, Multiple Output (MEVIO) cluster to improve MEVIO channel capacity.

All these solutions include automated interactions between automated machinery or vehicles, as well as their orchestration. Thus, connectivity, or more precisely, mobile network coverage, is seen as key enabler for optimizing operational efficiency and allows for a huge degree of flexibility.

Known connectivity solutions addressing off-highway use cases greatly differ with respect to application areas and requirements. Consider the case of off-road scenario without network coverage: automated vehicles or robots, members of a swarm and nodes of communication, may be operating at work sites with potentially huge spatial dimensions and large physical separation between them. From a previous task, nodes finish in different locations, potentially very far apart.

Due to the large physical separation, direct communication is not possible with all of them, only some nodes from the entire swarm can communicate with each other. To get the information related to the next task, nodes need to create a fully connected swarm. The same need, but for different reasons, could be necessary also for aerials connected via non-terrestrial networks (for connecting a spontaneously deployed radio access network) or for vehicle-to-everything communication (V2X, for sharing synchronization information). A trivial solution addressing this need would be that all nodes get "sufficiently close" to a meeting point (e.g., in the center of the operations area). Nevertheless, there are some drawbacks related to this sort of prior art: for example, many existing solutions can only be applied with the support of a mobile network, which can only provide limited coverage and may be subject to outages. Further, not every user or swarm operator wants to invest in "private", local radio access network deployments and their maintenance.

Thus, cost-efficient solutions that enable efficient operations of autonomous swarms even in areas without network coverage as well as harsh environments are required. Here, direct or indirect communications among swarm members is beneficial and may also serve as a fallback mode in case local network infrastructure fails.

Hence, the problem is how to efficiently create a (fully) connected swarm, taking into consideration the capabilities of wireless technology in-use, combined with efficiency-optimizing criteria, e.g., least time for swarm formation of automated entities or least energy consumption.

It is an objective of the present invention to provide such a method and corresponding automated entities.

This objective is solved by a method for distributed swarm formation with the features of claim 1.

The dependent claims include advantageous further developments and improvements of the present principles as described below.

According to an aspect of the invention, there is provided a method of distributed swarm formation for a plurality of automated entities initially deployed across an operations area. At least one automated entity may wirelessly connect with at least another automated entity from the plurality of automated entities. The method comprises assessing, by each automated entity, an initial individual rank, given own communication and non-communication capabilities, and generating an individual planned strategy to reach a meeting area under individual optimization constraints; communicating, by each automated entity, the assessed initial rank and capabilities data; depending on the initial ranks and capabilities data received from responding automated entities, establishing communications with responding automated entities and updating the initial individual rank and planned strategy to reach the meeting area while maintaining connection with the responding automated entities, under swarm formation optimization constraints.

Compared to a trivial approach, where all swarm members would be meeting at the same predefined spot (e.g., usually at the center of the operations area), and all nodes get "sufficiently close" to it, a more advanced search strategy accounts for the swarm entities' capabilities and allows for optimizing the distributed search strategy with respect to various objectives (e.g., aggregated, or individual energy or fuel consumption, time to form or reassemble the entire swarm etc.).

In some embodiments, communication capabilities may include communication range, transmission power, supported frequency bands and wireless communication technologies, such as radio, ZigBee, Bluetooth, WLAN, ultra-wideband, device to device communication, cellular or satellite communications. Furthermore, non-communication capabilities may include type and characteristics of automated entity, fuel or energy status, on-board computing power.

According to the invention, assessing individual rank means determining a priority and an order to reach the meeting area, given communication capabilities, distance or characteristics of path to meeting area and estimated fuel/energy or time consumption. Furthermore, generating individual planned strategy to reach meeting area under individual optimization constraints means determining own step size and/or trajectory considering individual temporal, spatial or energy optimization constraints, and operating according to a behavior associated to the assessed individual rank, namely as a scout or as a follower of a scout. Moreover, updating the initial individual rank means adopting the order, priority and behavior associated to the updated rank.

In some embodiments, adopting the behavior of scout means determining, by each scout and under optimization constraints, an updated step size and trajectory towards meeting area, under the condition of maintaining connection(s) with responding automated entities and followers. Adopting the behavior of scout further means sharing the respective updated trajectory and step size to its followers if the scout estimates to lose connection to its closest follower(s) when moving according to the updated step size and trajectory. In other embodiments, adopting the behavior of scout means scout regularly issuing its own calculated step size and trajectory to follower(s). In yet another embodiments, adopting the behavior of scout means regularly determining both own and the follower's step size and trajectory and issues these data to the follower(s).

In some embodiments, updating the individual rank further means that, when two or more automated entities of similar ranks meet each other, they compare their respective capabilities, the entity with higher capabilities being assigned as superior in rank.

In some embodiments, adopting the behavior of follower means the automated entity operates dependent on the step size and trajectory provided by scout, by updating its own step size and trajectory accordingly. In some embodiments, adopting the behavior of follower means the automated entity indicates its last position to the scout, if it determines that it cannot follow the step size and trajectory provided by the scout, due to its limited capabilities. Moreover, adopting the behavior of follower further means to forward any indications of last positions received from other followers to the scout.

In some embodiments, establishing communications means connecting with automated entities reached directly using unicast or groupcast by means of radio communication, device-to-device communication, 5G side link, Wi-Fi direct, or Ultra-Wideband (UWB), broadcast communication by means of DSRC, LTE-V2X, NR-V2X, or geo-networking, or indirectly in a multi-hop manner.

In some alternative embodiments, instead of getting all swarm members reaching the same, unique meeting area, different clusters of automated entities are expected to reach different meeting areas, while maintaining connection under swarm formation optimization constraints.

According to another aspect of the invention, there is provided an automated entity, initially arbitrarily deployed across an operations area, and called to form a swarm. The entity comprises a plurality of sensors, means of wireless communication, a memory and at least one processor coupled to the memory. The at least one processor is configured to execute the one or more instructions of assessing an initial individual rank, based on own communication and non-communication capabilities, and generating an individual planned strategy to reach a meeting area under individual optimization constraints; communicating the assessed initial rank and capabilities data; depending on the initial ranks and capabilities data received from responding automated entities, establishing communications with responding automated entities and updating the individual rank and planned strategy to reach the meeting area while maintaining connection with the responding automated entities, under swarm formation optimization constraints.

Here, energy and fuel consumption of individual swarm members (automated entities) are also important parameters for overall operations efficiency. Moreover, communication cost and related trade-offs are considered, in particular when cellular or satellite communication is involved.

Further features of the present invention will become apparent from the following description and the appended claims in conjunction with the figures.

### Figures

Fig. 1 shows an exemplary scenario where swarm entities are arbitrary deployed across an operations area, a meeting area is defined, and automated entities are called to form a distributed swarm,
Fig. 2 illustrates the scenario of Fig. 1, wherein the automated entities from Fig. 1 are shown connected in clusters, having illustrated their respective wireless communication ranges,
Fig. 3 shows self-assessed ranks of each automated entity participant to the scenario from Fig. 1,
Fig. 4 presents a dynamic movement of the updated ranked automated entities participating to the scenario from Fig. 1,
Fig. 5 shows further the dynamic advancement in the scenario discussed in Fig. 4, as they get closer to meeting area and having illustrated the respective communication ranges for each automated entity concerned,
Fig. 6 presents the moment when two scouts reach the meeting area and establish a fully connected swarm,
Fig. 7 shows a possible ground topology of a fully connected swarm distributed at two meeting areas, and supported by aerial entities,
Fig. 8 shows a drone or an aerial vehicle part of a fully connected network of the automated entities AE0 - AE',
Fig. 9 illustrates a method of distributed swarm formation according to invention.

### Detailed description

For a better understanding of the principles of the present invention, embodiments of the invention will be explained in more detail below with reference to the figures. Like reference numerals are used in the figures for the same or equivalent elements and are not necessarily described again for each figure. It is to be understood that the invention is not limited to the illustrated embodiments and that the features described may also be combined or modified without departing from the scope of the invention as defined in the appended claims.

As referred to herein, "swarm automated entities" or "swarm entities" means autonomous vehicles, robots or unmanned aerial vehicles configured to emulate a swarm, and to be able to move and operate under a common goal. Usually, once formed, swarm motion is mutually and automatically coordinated by a coordinator (either an operator or an automated entity itself), referred to as "master" (or "swarm master"), while the term of "slave" or "swarm slave" includes an automated entity directly controlled by the master.

Those automated entities are supposed to possess perception, communication and maneuvering capabilities; for example, such an automated entity may be equipped with several sensors, which allow for object/obstacle detection and collision avoidance - such as camera, radar, lidar, infrared, ultrasound, etc. In addition, means for localization (GNSS sensors, for example) are provided; functions such as vehicle motion (or flight for UAV) are controlled (or programmed) by software, e.g., drive-by-wire system. Furthermore, the same swarm entity may communicate using its on-board communication unit supporting various radio technologies, e.g., radio, ZigBee, Bluetooth, WLAN, ultra-wideband, device-to-device, cellular or satellite, but not limited to them.

Various embodiments described herein are generally directed to techniques of communication for formation and self-coordination of a swarm of automated entities called to achieve a common mission. However, as part of enabling a dynamic swarm formation, there is mandatory that communication among the automated entities be kept unobstructed, no matter how much the hierarchy in the swarm change until the entrusted mission is completed.

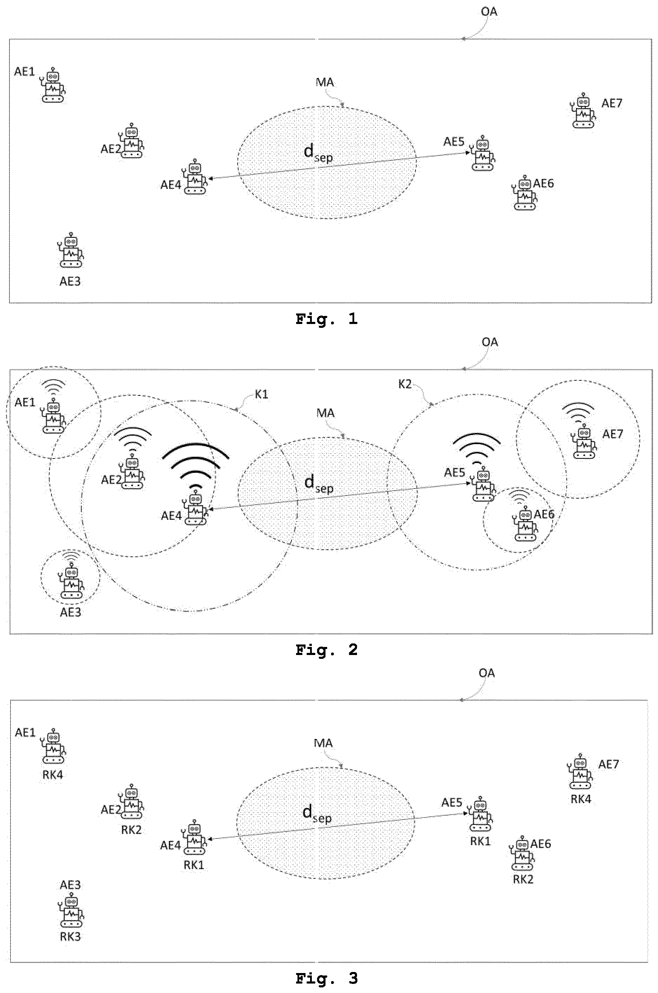

In the following, the exemplary scenario shown in Figure 1 is used to further explain how the method according to invention operates.

Figure 1 illustrates an exemplary scenario where an exemplary number of seven automated entities AE₁...AE₇ are arbitrarily deployed across an operations area OA which, for example, may comprise tens or hundreds of hectares. Automated entities are activated and called to form a swarm entrusted with a mission, or they may follow a pre-defined swarm policy including mission type and task schedule, and enter swarm formation mode; inevitably, the initial large physical separation does not allow all of them to be fully connected, even though direct communication may be possible with one or several of them. Another mention is that, although the figures may show automated entities deployed on a ground plan, there is possible to have automated entities deployed in air or being high-altitude mobile platforms, able to supervise the swarm formation from a higher perspective.

For the sake of exemplifying the inventive concept, a meeting area MA is illustrated within operations area OA. As a mention, the meeting area may be anywhere within operations area, it does not necessarily correspond to the center of it, and may be not just one, but multiple meeting areas. Each automated entity AE₁, ..., AE₇ may be provided with a local map including meeting area(s) or respective meeting area(s) coordinates (e.g., GNSS coordinates). Initially, some of the automated entities, closest to meeting area MA, namely AE₄ and AE₅, are separated by a distance dₛₑₚ exceeding their respective wireless communication ranges. However, each automated entity tries to establish communications with at least one automated entity nearby, considering own communication capabilities and range. Further on, each automated entity performs localization and determines distance or path to the indicated meeting area MA. Based on these data, each automated entity estimates the energy consumption required to reach the designated meeting area.

For a better understanding of the communication capabilities of automated entities from Fig. 1, Fig. 2 shows respective range of wireless communications means for each automated entity in dashed circles. For example, AE₃ and AE₆ employ short-distance communication ranges, respectively, while AE₄ and AE₅ are equipped with wireless communication means of higher range. As depicted, each automated entity is a communication node, but not all nodes are in range to each other: for example, entities AE₂ and AE₄ are able to communicate, and form a first connected sub-cluster K1 (delimited by a long-dash-double-dot line, overlapping to the wireless communication rang of AE4); AE₅ and AE₆ are able to form a second connected sub-cluster K2 which overlaps with communication range of AE5 (delimited by a dash-dot line); instead, AE₁, AE₃ and AE₇ are isolated, and first and second clusters K1 and K2 are separated. Those separated entities or sub-clusters may apply an optimized search strategy for approaching each other and (re-)forming the entire swarm.

Let's suppose that automated entities AE₁...AE₇ finished creating the depicted topology from a previous task; in order to re-group for starting another mission or task, nodes need to (re)create a fully connected cluster. Compared to a trivial approach, where all swarm entities would be meeting by default at the same predefined spot (usually the center of operations area OA), a more advanced strategy of forming a fully connected cluster accounts for the swarm entities' capabilities and knowledge. Therefore, a swarm formation objective may be adopted, based on pre-defined criteria (e.g., cluster composition with regard to mission type, entity types, communication capabilities, individual or aggregated fuel or energy) under optimization constraints, such as: "minimum time to form swarm", "minimum energy consumption to form swarm", "minimum distance to form swarm", etc.

As depicted by Fig. 3, each automated entity may be programmed to determine its own initial rank within swarm, expressed by different parameters: distance to meeting area, communication capabilities or range, energy status or fuel range, on-board computing power. For example, when rank is expressed by distance to meeting area, automated entities AE₄ and AE₅ are of first rank (superior rank), AE₂ and AE₆ are of second rank, AE₃ is of third rank and AE₁ and AE₇ are of fourth rank (e.g., in quantized form, RK1: d<1km, RK2: d<2km, RK3: d<3km etc.). If an automated entity cannot reach meeting area due to other limitations (fuel or energy shortage, for example), the initial estimated rank is set to an inferior value (for example, from RK3 to RK4 for AE₃). In other words, low energy or fuel means a penalty for rank. The same applies for the rest of parameters, taken alone or in combination.

Once estimated those data, each automated entity broadcasts at least its own identifier (ID), type (e.g., combine harvester or tractor), energy/fuel status and initial rank, and monitors wireless channels for possible signals in response from other entities. Depending on changes of its status (for example, an accident, an emergency or an unexpected failure of a non-communication system, which would prevent the automated entity to move or to operate as expected) additional data may be added to the broadcasted signals: a message "need help" requiring a "search and rescue" operation, for example.

In case no such response is received by one entity within a predetermined time limit, due to its isolated status (for example, the case of AE₁, AE₃, AE₇ in the scenario from Fig. 2), the respective entities determine their own step size and trajectory towards meeting area MA and proceed to an independent approach, while constantly broadcasting their presence. It is possible not to be needed to move (being placed already within the meeting area, for example) - mandatory is to announce its presence and, ultimately, to connect in swarm. In case each automated entity receives responses from each other automated entities and the pre-defined criteria for swarm formation are fulfilled, it means a fully connected swarm is formed. A swarm master entity, typically characterized by onboard computing capabilities, creates mission plan and task schedules that are issued to the swarm members.

In the following, there is described the case when one automated entity receives signals in response from several other automated entities (for example, each automated entity from the two sub-clusters K1 and K2), but the swarm formation criteria are not fulfilled. For example, automated entity AE₂ may receive signals of response from AE₄ and may be able to communicate with it, exchanging data; once the communication established within sub-cluster K1, also the initial individual ranks are exchanged and updated. If several automated entities are located within the same distance to the meeting area, the entity with highest energy or fuel status or capabilities assumes the role of "scout" and a corresponding behavior. For example, since AE₄ is higher in rank in comparison with AE₁ and AE₂, at least according to the self-estimated initial rank, AE₄ may implicitly assume the role and behavior of scout within sub-cluster K1, i.e., leading approaching the meeting area MA while maintaining connection of sub-cluster K1 and searching for other entities to connect into swarm. Same case applies for sub-cluster K2, for which AE₅ may assume the role of scout. If still multiple entities are suitable for the role of scout within the same sub-cluster, the scout will be determined randomly, e.g., using contention resolution mechanisms. Furthermore, the scout behavior means adopting one of the following alternatives: a) scout only issues its calculated step size and trajectory, if it estimates to lose connection to follower(s) - lowest level of energy spent on communications; b) scout regularly issues its own calculated step size and trajectory to follower(s) - medium level of energy consumption; c) scout regularly calculates its own and the follower's step size and trajectory data and issues these to the follower(s) - highest energy consumption for calculation of all trajectories and communications thereof.

Furthermore, any other entity connected with the respective scout, and of inferior rank becomes a "follower". For example, AE₄ has AE₂ as follower; AE₆ is the follower of AE₅. Adopting such a "follower" behavior means the respective automated entity has the freedom to operate according to its initial planned strategy to reach the meeting area; also, a follower may operate dependent on a step size and trajectory provided by its respective scout and may update its own step size and trajectory accordingly. In case one follower determines that it cannot follow the step size and trajectory provided by the scout, due to its limited capabilities (e.g., energy/fuel status), the follower indicates its last position to the scout and proceed to determine alternative trajectories, given energy/fuel constraints. In addition, each follower forwards any indications of last positions received from other followers to the scout.

Each scout AE₄ and AE₅ determines its "search step size" depending on the specified optimization constraints or goal of swarm formation. For example, if the optimization goal is to minimize the aggregated energy or fuel consumption until swarm formation is done, the respective scout may move only as far as the communication range to its nearest followers allows and instruct the other swarm entities to follow accordingly, but only to the extent necessary to maintain the connectivity. For that, the scout may estimate distance to other responding entities, for example based on the signal strength of the response or on the time difference between two subsequent signals. Instead of an estimated distance based on radio signal ranging between swarm entities, the wireless communication quality could be considered. Thus, the "search burden" is shared among the connected swarm entities.

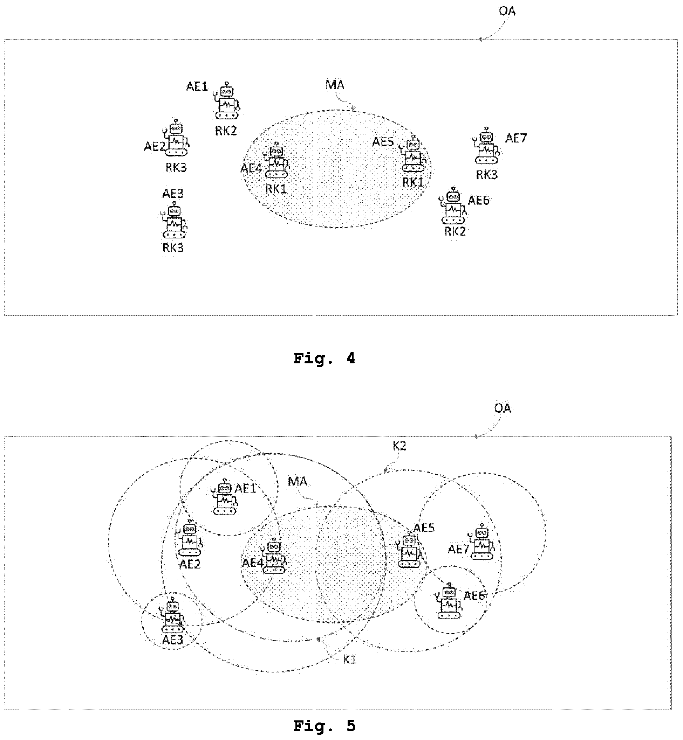

Fig. 4 presents a further dynamic movement of the updated ranked automated entities as they get closer to meeting area. The initial isolated automated entity, AE₃, following its own planned approaching the meeting area MA, is about to connect with sub-cluster K1. Once shared their data (as identifiers, ranks, fuel or energy status, type and other characteristics of the sort), their respective initial ranks are up to be re-assessed. Updating the individual ranks for two or more automated entities of similar ranks meeting each other means they compare their respective capabilities, the entity with higher capabilities being assigned as superior in rank. For example, the updated rank RK2 of the initial isolated automated entity AE₁ is now superior to the initial rank RK4 and superior to the initial rank RK3 of another connected entity, namely AE₂; the same applies to AE₇, which is upgraded from RK4 to RK3 at this moment. Moreover, if one scout estimates it is possible to lose connection to its closest follower(s) when moving according to the updated step size and trajectory, the respective scout shares the respective updated trajectory and step size to its followers. By doing so, even in the situation that the respective scout goes out of communication range with one or more of its followers, the broadcasted data (own identifier, type, fuel/energy status, rank, plus received similar data from respective followers, in addition to updated step size and planned trajectory) are not lost, the respective followers may still use and forward or relay the scout's data, so that all previously connected followers can follow the scout accordingly, considering their own capabilities (e.g., energy/fuel status).

Fig. 5 shows further the dynamic advancement in the scenario discussed in Fig. 4, illustrating the respective communication ranges for each automated entity concerned.

As soon as respective scouts AE₄ and AE₅ discover each other, they connect themselves as well as the previously separated sub-clusters K1 and K2. As soon as two scouts are within communication range, they exchange information on their followers, e.g., their number, ranks, fuel or energy status, and characteristics (vehicle type identifiers) of swarm entities. Further, they check if swarm formation criteria are fulfilled. If this is the case, an indication of swarm formation completion is broadcasted and the foreseen master entity is informed and triggered to manage swarm operations, e.g., creation and distribution of mission configuration and related task schedules. Otherwise, the two scouts update their ranks taking the exchanged data, their individual capabilities, as well as a pre-defined scout policy into account for determining a new scout. For example, a pre-defined scout policy may instruct a first scout reaching the meeting area to wait at a pre-defined spot for further scout(s) to arrive and to regularly issue discovery beacon signals.

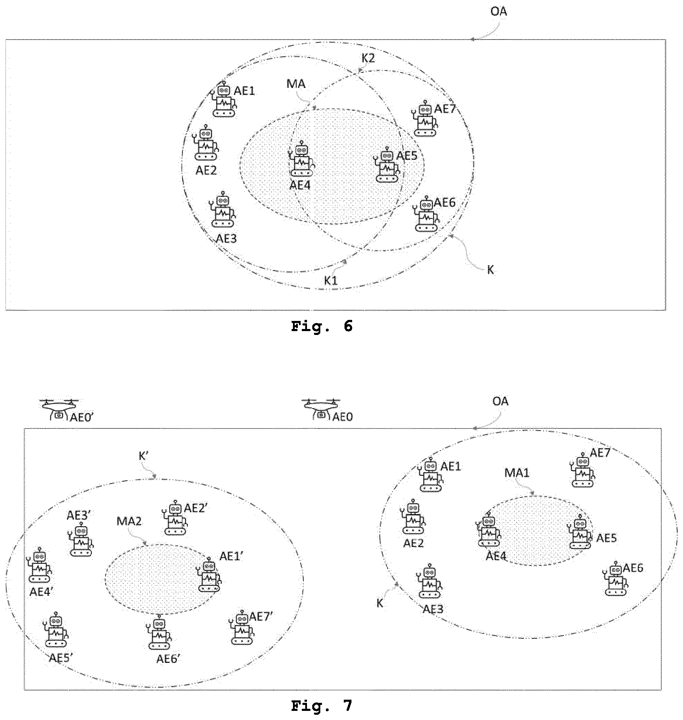

Fig. 6 presents the moment when the scouts reach the meeting area and are fully connected. If it is determined that sufficient swarm nodes are present for performing the intended mission (meaning the swarm is both completed and fully connected), the scouts report this to the foreseen swarm master vehicle, which oversees configuring and distributing the mission configuration and related tasks. Otherwise, the scouts may remain at the center and wait for further scouts/nodes to arrive.

Fig. 7 shows a possible ground topology of a fully connected swarm distributed at two meeting areas and supported by aerial entities. Given the flexibility conferred by a fully connected swarm K, it is possible to group swarm entities on various sub-tasks to be performed by swarm, without compromising the optimization of fuel/energy. For example, let's suppose that automated entities AE₁-AE₃ prepare the soil; after them, automated entities AE₄ and AE₅ follow with planting; lastly, automated entities AE₆ and AE₇ finish the mission by applying fertilizing. The same applies for the group AE₁, - AE_{7'}. Initially, the separation distance between respective automated entities summoned to form a swarm exceeded their respective wireless communication range. Several meeting areas (MA1, MA2) are provided for sub-clusters of connected entities: for example, AE₁-AE₇ receive a first meeting area MA1, situated on one extremity of the operations area; AE_{1'}-AE_{7'} receive a second meeting area MA2, different from the first meeting area. Such meeting area definitions can be part of the mission configuration created and distributed by the swarm master entity or part of a pre-defined mission policy. Further, aerial entities (for example, a drone or a high-altitude mobile platform) AE₀ and AE_{0'} may be envisioned to support the localization of swarm nodes and directly communicate and instruct the swarm scouts and/or automated entities where to move for swarm formation.

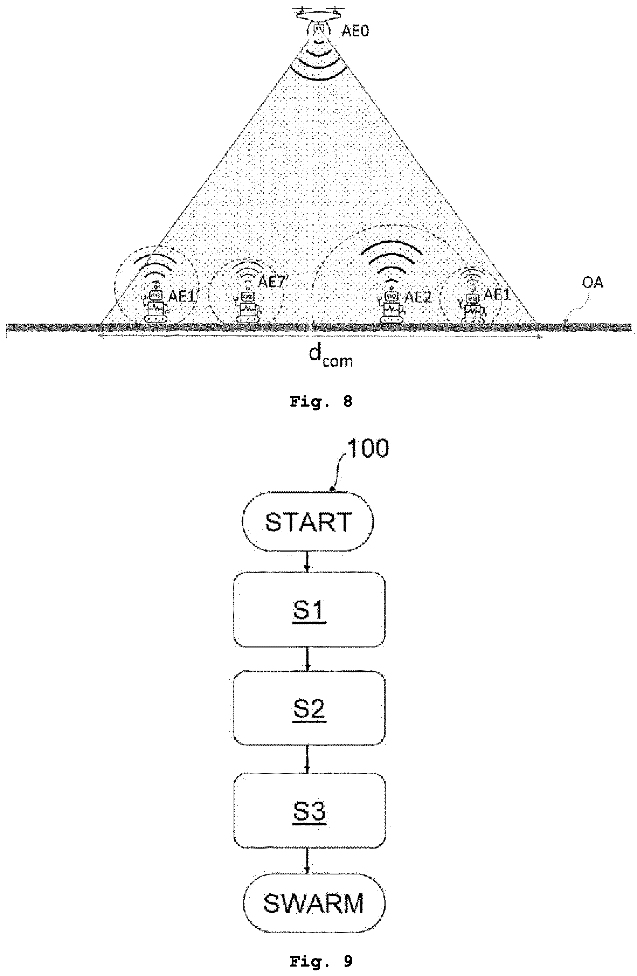

Fig. 8 shows the drone AE₀, as part of a fully connected network of the automated entities AEᵢ, AE_{i'}, i=1... 7, from Fig. 7. AE_{1'} AE_{7'}, AE₁, AE₂ are situated within the communication range of AE₀ expressed by a distance d_{com}.

In order to optimize their formation as a swarm, to reach the designated meeting areas in due time, by consuming minimum fuel/energy, at least one automated entity from each mentioned group may assume the role of scout in search for further entities to connect with For the sake of exemplification, let's suppose that initially, AE₀ is in range with AE₁, ,AE_{7'}, AE₁ and AE₂; AE_{0'} is in range with AE_{3'} - AE_{5'}. On the ground level, AEᵢ, i=1... 7, are connected in a single cluster K, as well as AE_{i'}, i'=1...7. Once the swarm formation is triggered, each concerned entity starts by assessing its own initial rank, given own communication and non-communication capabilities - including AE₀, AE_{0'}. In this context, since aerial entities AE₀, AE_{0'} may have a comprehensive overview of the operations area OA, it is possible to take over the role of scouts respectively and to enable approaching of respective meeting areas in the manner already described.

Nevertheless, as long as swarm formation criteria are not fulfilled (one of planting entities is missing at the second meeting area, for example), even though all automated entities are connected, the swarm formation is not completed.

However, such a missing entity may be easily detected within a fully connected cluster K, without the need for traveling towards a single meeting area and back towards different meeting areas for different sub-connected clusters.

Fig. 9 is a flowchart of a method according to the present disclosure.

According to the first aspect of invention, there is provided a method 100 for distributed formation of a swarm of automated entities. A plurality of automated entities is initially deployed across an operations area; at least one automated entity is able to wirelessly connect with at least another automated entity from the plurality of automated entities. One or more meeting area(s) are known in advance by each automated entity called to form the swarm. Once the swarm formation is triggered (start), the method comprises:
Step 1: assessing, by each automated entity, an initial individual rank, given own communication and non-communication capabilities, and generating an individual planned strategy to reach a meeting area under individual optimization constraints.
Step 2: communicating, by each automated entity, the assessed initial rank and capabilities data.
Step 3: depending on the initial ranks and capabilities data received from responding automated entities, establishing communications with responding automated entities and updating the initial individual rank and planned strategy to reach the meeting area while maintaining connection with the responding automated entities, under swarm formation optimization constraints.

Additionally, assessing initial individual rank means determining a priority and an order to reach the meeting area, given communication capabilities, distance and characteristics of path to meeting area and estimated fuel/energy or time consumption.

In some embodiments, communication capabilities include communication range, transmission power, supported frequency bands and wireless communication technologies: radio, ZigBee, Bluetooth, WLAN, ultra-wideband, device-to-device, cellular or satellite communications. Variants such as UHF/VHF, Wi-Fi, LoRa, Dedicated Short Range Communication (DSRC) are also included.

In some embodiments, non-communication capabilities include type and characteristics of automated entity, fuel or energy status, on-board computing power. In addition, capabilities data may include data such as location with respect to operations area, relative orientation with respect to other automated entities; sensor data (speed, acceleration, and/or relative speed with respect to other automated entities) and operational data, such as radio signal round-trip time estimates for ranging, radio connections to other automated entities etc.

Generating individual planned strategy to reach meeting area under individual optimization constraints means determining own step size and/or trajectory considering individual temporal, spatial or energy optimization constraints, and operating according to a behavior associated to the assessed initial individual rank, namely as a scout or as a follower of a scout. Moreover, updating the initial individual rank means adopting the order, priority and behavior associated to the updated rank. Updating the individual rank further means that, when two or more automated entities of similar ranks meet each other, they compare their respective capabilities, the entity with higher capabilities being assigned as superior in rank.

Adopting the behavior of scout means determining, by each scout and under optimization constraints, an updated step size and trajectory towards meeting area, under the condition of maintaining connection(s) with responding automated entities and followers. Further on, adopting the behavior of scout means sharing the respective updated trajectory and step size to its followers, if the scout estimates to lose connection to its closest follower(s) when moving according to the updated step size and trajectory.

Adopting the behavior of follower means the automated entity operates dependent on the step size and trajectory provided by scout, by updating its own step size and trajectory accordingly. Furthermore, adopting the behavior of follower means the automated entity indicates its last position to the scout, if it determines that it cannot follow the step size and trajectory provided by the scout, due to its limited capabilities. In addition, adopting the behavior of follower further means to forward any indications of last positions received from other followers to the scout.

In some embodiments, establishing communications means connecting with automated entities reached directly using unicast or groupcast by means of radio communication, device-to-device communication, 5G side link, Wi-Fi direct, or Ultra-Wideband (UWB), broadcast communication by means of DSRC, LTE-V2X, NR-V2X, or geo-networking, or indirectly in a multi-hop manner.

Some embodiments may provide that different clusters of automated entities are expected to reach different meeting areas, while maintaining connection under swarm formation optimization constraints.

Another aspect provided by the invention is an automated entity, initially arbitrarily deployed across an operations area, and called to (re)form a swarm in order to perform a mission. Such an entity may comprise a plurality of sensors, means of wireless communication, a memory and at least one processor coupled to the memory. The at least one processor is configured to execute the one or more instructions of assessing an initial individual rank, based on own communication and non-communication capabilities, and generate an individual planned strategy to reach a meeting area under individual optimization constraints; communicating the assessed initial rank and capabilities data; depending on the initial ranks and capabilities data received from responding automated entities, establishing communications with responding automated entities and update the individual rank and planned strategy to reach the meeting area while maintaining connection with the responding automated entities, under swarm formation optimization constraints.

Having assigned the scout role, one automated entity computes its own search step size, determine a trajectory or a path towards meeting area, depending on the condition to maintain connection(s) with responding automated entities and followers under the swarm optimization goal. The scout behavior may further comprise one of the following alternatives: a) scout only issues its calculated step size and trajectory, if it estimates to lose connection to follower(s); b) scout regularly issues its own calculated step size and trajectory to follower(s); c) scout regularly calculates its own and the follower's step size and trajectory data and issues these to the follower(s). In other words, in some embodiments, under the swarm optimization goal, the scout may be able to regularly determine individual follower step size and trajectory towards meeting area for each of its followers, according to the respective follower rank, and furthermore, regularly communicate the respective computed step size and trajectory to each of its followers. In some embodiments, the scout may estimate losing the connection to its closest follower(s) when moving according to the determined step size and trajectory; in such a case, the scout communicates its own search step size and trajectory to followers. Choosing one or another alternative depends on the swarm optimization goal, especially when energy status is concerned.

Having assigned the follower role, the automated entity may operate following the initial planned step size and trajectory or may follow the step size and trajectory provided by scout, by updating its own step size and trajectory accordingly. In some embodiments, the follower may indicate its last position to the scout, if the follower determines that it cannot follow the provided step size and trajectory due to its limited capabilities. In addition, the follower may forward any indication of last positions received from other followers to the scout, and the respective scout records any indication of last positions provided by followers.

Any automated entity not having received response from any other automated entity from the plurality of automated entities, the automated entity operates autonomously according to an individually planned strategy.

The automated entity described herein comprises, for example, robots, automated guided vehicles, unmanned and autonomous systems, autonomous vehicles, industrial, agricultural, or construction equipment, unmanned aerial vehicles, drones, or high-altitude mobile platforms.

Additional potential use cases for the invention are listed in the following: agricultural machinery and robots; mining; construction and road works; cargo, container, and supply handling by autonomous Automated Guided Vehicles (aAGVs).

Additionally, the invention provides a swarm of automated entities, the swarm being formed according to the inventive method. The automated entities are initially arbitrarily deployed across an operations area and are called to (re)form a swarm to perform a mission. The swarm comprises at least one automated entity as scout and a plurality of automated entities as followers, any of the swarm entity being able to behave as provided by the inventive method. The swarm of automated may comprise automated entities described herein, including combinations thereof, wherein aerial entities are able to support ground entities on distributed formation. For example, drones, high-altitude mobile platforms, or aerial vehicles may help to connect the swarm's automated entities, acting as communication relay or mobile base station.

Moreover, there is provided a computer-readable medium for distributed swarm formation of automated entities and storing computer-executable instructions. As noted above, various functions or operations relating to the present method disclosed herein may be implemented in one or more processors or computer systems running in automated entities. As well known in the art, a general-purpose computer typically comprises a central processor or other processing device, an internal communication bus, various types of memory or storage media (RAM, ROM, EEPROM, cache memory, disk drives, etc.) for code and data storage, one or more network interface cards or ports for communication purposes. The software functionalities involve programming, including instructions or executable code as well as associated stored data, e.g., files used for implementing various operations including operations or functionalities described herein in accordance with the present disclosure. The software code may relate to a client or a server or network element functions and may be executable by the general-purpose computer. In operation, as noted above, the code is stored in a non-transitory machine-readable storage medium within a computer platform. However, at other times, the software may be stored at other locations and/or transported for loading into an appropriate general purpose computer system for execution. Software code for applications or other programming relating to operations and/or functionalities disclosed herein may also be stored in a server and transmitted through a network for storage in memories of a client.

## Claims

1. Method of Swarm Formation (100) for a plurality of automated entities initially deployed across an operations area, wherein at least one automated entity is able to wirelessly connect with at least another automated entity from the plurality of automated entities, **characterized in that** the method comprises:
(S1) assessing, by each automated entity, an initial individual rank, given own communication and non-communication capabilities, and generating an individual planned strategy to reach a meeting area under individual optimization constraints, wherein (S1) assessing initial individual rank means determining a priority and an order to reach the meeting area, given communication capabilities, distance and characteristics of path to meeting area and estimated fuel/energy or time consumption,
(S2) communicating, by each automated entity, the assessed initial rank and capabilities data,
(S3) depending on the initial ranks and capabilities data received from responding automated entities, establishing communications with responding automated entities and updating the initial individual rank and planned strategy to reach the meeting area while maintaining connection with the responding automated entities, under swarm formation optimization constraints.

2. The method according to claim 1, wherein communication capabilities include communication range, transmission power, supported frequency bands and wireless communication technologies, such as radio, ZigBee, Bluetooth, WLAN, ultra-wideband, device-to-device communication, cellular or satellite communications.

3. The method according to claim 1, wherein non-communication capabilities include type and characteristics of automated entity, fuel or energy status, on-board computing power.

4. The method according to claim 1, wherein (S1) generating individual planned strategy to reach meeting area under individual optimization constraints means determining own step size and/or trajectory considering individual temporal, spatial or energy optimization constraints, and operating according to a behavior associated to the assessed initial individual rank, namely as a scout or as a follower of a scout.

5. The method according to claim 1, wherein (S3) updating the initial individual rank means adopting the order, priority, and behavior associated to the updated rank.

6. The method according to claim 5, wherein adopting the behavior of scout means: determining, by each scout and under optimization constraints, an updated step size and trajectory towards meeting area, under the condition of maintaining connection(s) with responding automated entities and followers.

7. The method according to claim 6, wherein adopting the behavior of scout further means sharing the respective updated trajectory and step size to its followers if the scout estimates to lose connection to its closest follower(s) when moving according to the updated step size and trajectory.

8. The method according to claim 6, wherein adopting the behavior of scout means scout regularly issues its own calculated step size and trajectory to follower(s).

9. The method according to claim 6, wherein adopting the behavior of scout means scout regularly calculates its own and the follower's step size and trajectory data and issues these to the follower(s).

10. The method according to claims 4 and 5, wherein (S3) updating the individual rank further means that, when two or more automated entities of similar ranks meet each other, they compare their respective capabilities, the entity with higher capabilities being assigned as superior in rank.

11. The method according to claims 4 and 5, wherein adopting the behavior of follower means the automated entity operates dependent on the step size and trajectory provided by scout, by updating its own step size and trajectory accordingly.

12. The method according to claim 4 and 5, wherein adopting the behavior of follower further means the automated entity indicates its last position to the scout, if it determines that it cannot follow the step size and trajectory provided by the scout, due to its limited capabilities.

13. The method according to claim 4 and 5, wherein adopting the behavior of follower further means to forward any indications of last positions received from other followers to the scout.

14. The method according to claims 4, 5 and 6, wherein adopting the behavior scout further means recording any indications of last positions provided by followers.

15. The method according to claim 1, wherein (S3) establishing communications means connecting with automated entities reached directly using unicast or groupcast by means of radio communication, cellular or satellite communication, device-to-device communication, 5G side link, Wi-Fi direct, or Ultra-Wideband (UWB), broadcast communication by means of DSRC, LTE-V2X, NR-V2X, or geo-networking, or indirectly in a multi-hop manner.

16. The method according to claim 1, wherein different clusters of automated entities are expected to reach different meeting areas, while maintaining connection under swarm formation optimization constraints.

17. An automated entity, initially arbitrarily deployed across an operations area, and called to form a swarm, the entity comprising:
a plurality of sensors,
means of wireless communication, by which the automated entity is able to wirelessly connect with at least another automated entity from the plurality of automated entities,
a memory,
and at least one processor coupled to the memory, wherein the at least one processor is configured to execute the one or more instructions of:
assessing an initial individual rank, based on own communication and non-communication capabilities, and generate an individual planned strategy to reach a meeting area under individual optimization constraints,
communicating the assessed initial rank and capabilities data,
depending on the initial ranks and capabilities data received from responding automated entities, establishing communications with responding automated entities and update the individual rank and planned strategy to reach the meeting area while maintaining connection with the responding automated entities, under swarm formation optimization constraints, and
wherein, not having received any response from any other automated entity from the plurality of automated entities, the automated entity operates autonomously according to the individually planned strategy.

18. Automated entity according to claim 17, wherein the automated entity is an aerial vehicle that possess wide area and local area wireless communication capabilities and acts as a communication relay or mobile base station.

19. Swarm of automated entities called to perform a mission, wherein the swarm comprises automated entities according to claims 17 and 18, including combinations thereof, wherein aerial entities are able to support ground entities on distributed swarm formation.

20. A computer-readable medium for distributed formation of automated entities and storing computer-executable instructions, wherein the computer-executable instructions when executed cause at least one processor to execute the method according to any of claims 1-16.

## Patentansprüche

1. Verfahren zur Schwarmbildung (100) für eine Vielzahl von automatisierten Entitäten, die anfänglich über ein Einsatzgebiet eingesetzt sind, wobei mindestens eine automatisierte Entität in der Lage ist, eine drahtlose Verbindung zu mindestens einer weiteren automatisierten Entität aus der Vielzahl von automatisierten Entitäten herzustellen, **dadurch gekennzeichnet, dass** das Verfahren Folgendes umfasst:
(S1) Bewerten eines anfänglichen individuellen Ranges durch jede automatisierte Entität unter Berücksichtigung eigener Kommunikations- und Nicht-Kommunikationsfähigkeiten und Erzeugen einer individuellen geplanten Strategie zum Erreichen eines Treffpunkts unter individuellen Optimierungsbedingungen, wobei (S1) Bewerten des anfänglichen individuellen Ranges Bestimmen einer Priorität und einer Reihenfolge zum Erreichen des Treffpunkts unter Berücksichtigung von Kommunikationsfähigkeiten, Entfernung und Eigenschaften eines Weges zum Treffpunkt und geschätztem Kraftstoff-/Energie- oder Zeitverbrauch bedeutet,
(S2) Kommunizieren der bewerteten Daten zum anfänglichen Rang und zu den Fähigkeiten durch jede automatisierte Entität,
(S3) in Abhängigkeit von den Daten zum anfänglichen Rang und zu den Fähigkeiten, die von den antwortenden automatisierten Entitäten empfangen wurden, Herstellen von Kommunikationen zu den antwortenden automatisierten Entitäten und Aktualisieren des anfänglichen individuellen Ranges und der geplanten Strategie, um den Treffpunkt zu erreichen, während die Verbindung zu den antwortenden automatisierten Entitäten unter Optimierungsbedingungen zur Schwarmbildung aufrechterhalten wird.

2. Verfahren nach Anspruch 1, wobei die Kommunikationsfähigkeiten die Kommunikationsreichweite, die Übertragungsleistung, unterstützte Frequenzbänder und drahtlose Kommunikationstechnologien beinhalten, wie beispielsweise Funk, ZigBee, Bluetooth, WLAN, Ultrabreitband, Vorrichtung-zu-Vorrichtung-Kommunikation, Mobilfunk- oder Satellitenkommunikationen.

3. Verfahren nach Anspruch 1, wobei die Nicht-Kommunikationsfähigkeiten den Typ und die Eigenschaften von automatisierten Entitäten, Kraftstoff- oder Energiestatus, Bordrechnerleistung beinhalten.

4. Verfahren nach Anspruch 1, wobei (S1) Erzeugen individueller geplanter Strategie zum Erreichen des Treffpunkts unter individuellen Optimierungsbedingungen Bestimmen der eigenen Schrittweite und/oder Trajektorie unter Berücksichtigung individueller zeitlicher, räumlicher oder energetischer Optimierungsbedingungen bedeutet, und Agieren gemäß einem Verhalten, das dem bewerteten anfänglichen individuellen Rang zugeordnet ist, nämlich als Scout oder als Nachfolger eines Scouts.

5. Verfahren nach Anspruch 1, wobei (S3) Aktualisieren des anfänglichen individuellen Ranges Übernehmen der Reihenfolge, Priorität und des dem aktualisierten Rang zugeordneten Verhaltens bedeutet.

6. Verfahren nach Anspruch 5, wobei Übernehmen des Verhaltens eines Scouts Folgendes bedeutet: Bestimmen einer aktualisierten Schrittweite und Trajektorie in Richtung des Treffpunkts durch jeden Scout und unter Optimierungsbedingungen, unter der Voraussetzung, dass die Verbindung(en) zu den antwortenden automatisierten Entitäten und den Nachfolgern aufrechterhalten wird (werden).

7. Verfahren nach Anspruch 6, wobei Übernehmen des Verhaltens des Scouts ferner Teilen der jeweiligen aktualisierten Trajektorie und Schrittweite mit seinen Nachfolgern bedeutet, falls der Scout einschätzt, dass er die Verbindung zu seinem/seinen nächsten Nachfolger(n) verliert, wenn er sich gemäß der aktualisierten Schrittweite und Trajektorie bewegt.

8. Verfahren nach Anspruch 6, wobei Übernehmen des Verhaltens des Scouts bedeutet, dass der Scout regelmäßig seine selbst berechnete Schrittweite und Trajektorie an den/die Nachfolger weitergibt.

9. Verfahren nach Anspruch 6, wobei Übernehmen des Verhaltens des Scouts bedeutet, dass der Scout regelmäßig seine eigene und die Schrittweite und Trajektoriendaten des/der Nachfolger(s) berechnet und diese an den/die Nachfolger weitergibt.

10. Verfahren nach den Ansprüchen 4 und 5, wobei (S3) Aktualisieren des individuellen Ranges ferner bedeutet, dass, wenn zwei oder mehr automatisierte Entitäten mit ähnlichen Rängen aufeinander treffen, diese ihre jeweiligen Fähigkeiten vergleichen, wobei die Entität mit den höheren Fähigkeiten als ranghöher eingestuft wird.

11. Verfahren nach den Ansprüchen 4 und 5, wobei Übernehmen des Verhaltens eines Nachfolgers bedeutet, dass die automatisierte Entität in Abhängigkeit von der durch den Scout bereitgestellten Schrittweite und Trajektorie agiert, indem sie ihre eigene Schrittweite und Trajektorie entsprechend aktualisiert.

12. Verfahren nach Anspruch 4 und 5, wobei Übernehmen des Verhaltens des Nachfolgers ferner bedeutet, dass die automatisierte Entität dem Scout ihre letzte Position angibt, wenn sie bestimmt, dass sie aufgrund ihrer begrenzten Fähigkeiten der durch den Scout bereitgestellten Schrittweite und Trajektorie nicht folgen kann.

13. Verfahren nach Anspruch 4 und 5, wobei Übernehmen des Verhaltens des Nachfolgers ferner bedeutet, dass alle von anderen Nachfolgern empfangenen Angaben zu letzten Positionen an den Scout weitergeleitet werden.

14. Verfahren nach den Ansprüchen 4, 5 und 6, wobei Übernehmen des Verhaltens des Scouts ferner Aufzeichnen aller durch Nachfolger bereitgestellten Angaben zu letzten Positionen bedeutet.

15. Verfahren nach Anspruch 1, wobei (S3) Herstellen von Kommunikationen Verbinden mit automatisierten Entitäten bedeutet, die direkt unter Verwendung von Unicast oder Groupcast mittels Funkkommunikation, Mobilfunk- oder Satellitenkommunikation, Vorrichtung-zu-Vorrichtung-Kommunikation, 5G-Sidelink, Wi-Fi Direct oder Ultra-Wideband (UWB), Broadcast-Kommunikation mittels DSRC, LTE-V2X, NR-V2X oder Geo-Networking oder indirekt in einer Multi-Hop-Weise erreicht werden.

16. Verfahren nach Anspruch 1, wobei erwartet wird, dass unterschiedliche Cluster automatisierter Entitäten unterschiedliche Treffpunkte erreichen, während die Verbindung unter Optimierungsbedingungen zur Schwarmbildung aufrechterhalten wird.

17. Automatisierte Entität, die anfänglich willkürlich über ein Einsatzgebiet eingesetzt wird und aufgerufen wird, einen Schwarm zu bilden, wobei die Entität Folgendes umfasst:
eine Vielzahl von Sensoren,
Mittel zur drahtlosen Kommunikation, über die die automatisierte Entität in der Lage ist, eine drahtlose Verbindung zu mindestens einer weiteren automatisierten Entität aus der Vielzahl von automatisierten Entitäten herzustellen,
einen Speicher,
und mindestens einen mit dem Speicher gekoppelten Prozessor, wobei der mindestens eine Prozessor konfiguriert ist, um die eine oder die mehreren Anweisungen auszuführen:
Bewerten eines anfänglichen individuellen Ranges basierend auf den eigenen Kommunikations- und Nicht-Kommunikationsfähigkeiten und Erzeugen einer individuellen geplanten Strategie, um unter individuellen Optimierungsbedingungen einen Treffpunkt zu erreichen,
Kommunizieren der bewerteten Daten zum anfänglichen Rang und zu den Fähigkeiten,
in Abhängigkeit von den Daten zum anfänglichen Rang und zu den Fähigkeiten, die von den antwortenden automatisierten Entitäten empfangen wurden, Herstellen von Kommunikationen zu den antwortenden automatisierten Entitäten und Aktualisieren des individuellen Ranges und der geplanten Strategie, um den Treffpunkt zu erreichen, während die Verbindung zu den antwortenden automatisierten Entitäten unter Optimierungsbedingungen zur Schwarmbildung aufrechterhalten wird, und wobei die automatisierte Entität, sofern sie keine Antwort von einer anderen automatisierten Entität aus der Vielzahl von automatisierten Entitäten empfangen hat, autonom gemäß der individuell geplanten Strategie agiert.

18. Automatisierte Entität nach Anspruch 17, wobei die automatisierte Entität ein Luftfahrzeug ist, das über drahtlose Weitbereichs- und lokale Kommunikationsfähigkeiten verfügt und als Kommunikationsrelais oder mobile Basisstation fungiert.

19. Schwarm automatisierter Entitäten, die zum Durchführen einer Mission aufgerufen werden, wobei der Schwarm automatisierte Entitäten nach den Ansprüchen 17 und 18, einschließlich Kombinationen davon, umfasst, wobei Luftentitäten in der Lage sind, Bodenentitäten bei verteilter Schwarmbildung zu unterstützen.

20. Computerlesbares Medium zur verteilten Bildung automatisierter Entitäten und zum Speichern von computerausführbaren Anweisungen, wobei die computerausführbaren Anweisungen, wenn sie ausgeführt werden, mindestens einen Prozessor veranlassen, das Verfahren nach einem der Ansprüche 1-16 auszuführen.

## Revendications

1. Procédé de formation en essaim (100) pour une pluralité d'entités automatisées initialement déployées dans une zone d'opérations, dans lequel au moins une entité automatisée est apte à se connecter sans fil à au moins une autre entité automatisée de la pluralité d'entités automatisées, **caractérisé en ce que** le procédé comprend :
(S1) l'évaluation, par chaque entité automatisée, d'un rang individuel initial, avec ses propres capacités de communication et de non-communication, et la génération d'une stratégie planifiée individuelle pour atteindre une zone de réunion sous des contraintes d'optimisation individuelles, dans lequel (S1) l'évaluation d'un rang individuel initial signifie la détermination d'une priorité et d'un ordre pour atteindre la zone de réunion, avec des capacités de communication données, une distance et des caractéristiques de chemin vers la zone de réunion et une consommation estimée de carburant/d'énergie ou de temps,
(S2) la communication, par chaque entité automatisée, des données relatives au rang initial et aux capacités évaluées,
(S3) en fonction des rangs initiaux et des données de capacités reçues en provenance des entités automatisées ayant répondu, l'établissement de communications avec les entités automatisées ayant répondu et la mise à jour du rang individuel initial et de la stratégie planifiée pour atteindre la zone de réunion tout en maintenant la connexion avec les entités automatisées ayant répondu, sous des contraintes d'optimisation de formation d'essaims.

2. Procédé selon la revendication 1, dans lequel les capacités de communication comportent la portée de communication, la puissance de transmission, les bandes de fréquences prises en charge et les technologies de communication sans fil, telles que la radio, ZigBee, Bluetooth, WLAN, l'ultra-large bande, la communication entre dispositifs, les communications cellulaires ou par satellite.

3. Procédé selon la revendication 1, dans lequel les capacités de non-communication comportent le type et les caractéristiques de l'entité automatisée, l'état du carburant ou de l'énergie, la puissance de calcul embarquée.

4. Procédé selon la revendication 1, dans lequel (S1) la génération d'une stratégie planifiée individuelle pour atteindre une zone de réunion sous des contraintes d'optimisation individuelles signifie la détermination de sa propre taille de pas et/ou de sa propre trajectoire en tenant compte des contraintes individuelles d'optimisation temporelle, spatiale ou énergétique, et le fonctionnement selon un comportement associé au rang individuel initial évalué, à savoir en tant qu'élément de repérage ou en tant que suiveur d'un élément de repérage.

5. Procédé selon la revendication 1, dans lequel (S3) la mise à jour du rang individuel initial signifie l'adoption de l'ordre, de la priorité et du comportement associés au rang mis à jour.

6. Procédé selon la revendication 5, dans lequel l'adoption du comportement d'élément de repérage signifie : la détermination, par chaque élément de repérage et sous contraintes d'optimisation, d'une taille de pas et d'une trajectoire mises à jour vers la zone de rencontre, à condition de maintenir une ou plusieurs connexions avec les entités automatisées et les suiveurs répondants.

7. Procédé selon la revendication 6, dans lequel l'adoption du comportement d'élément de repérage signifie en outre le partage de la trajectoire et de la taille de pas mises à jour respectives avec ses suiveurs si l'élément de repérage estime perdre la connexion avec son ou ses plus proches suiveurs lorsqu'il se déplace en fonction de la taille et de la trajectoire de pas mises à jour.

8. Procédé selon la revendication 6, dans lequel l'adoption du comportement d'élément de repérage signifie que l'élément de repérage communique régulièrement sa propre taille de pas et sa propre trajectoire calculées au(x) suiveur(s).

9. Procédé selon la revendication 6, dans lequel l'adoption du comportement de l'élément de repérage signifie que l'élément de repérage calcule régulièrement sa propre taille de pas et ses propres données de trajectoire et celles du suiveur, et les transmet au(x) suiveur(s).

10. Procédé selon les revendications 4 et 5, dans lequel (S3) la mise à jour du rang individuel signifie en outre que, lorsque deux ou entités automatisées ou plus de rangs similaires se rencontrent, elles comparent leurs capacités respectives, l'entité avec des capacités plus élevées se voyant attribuer un rang supérieur.

11. Procédé selon les revendications 4 et 5, dans lequel l'adoption du comportement de suiveur signifie que l'entité automatisée fonctionne en fonction de la taille de pas et de la trajectoire fournies par l'élément de repérage, en mettant à jour sa propre taille de pas et sa propre trajectoire en conséquence.

12. Procédé selon les revendications 4 et 5, dans lequel l'adoption du comportement de suiveur signifie en outre que l'entité automatisée indique sa dernière position à l'élément de repérage, si elle détermine qu'elle ne peut pas suivre la taille de pas et la trajectoire fournies par l'élément de repérage, en raison de ses capacités limitées.

13. Procédé selon les revendications 4 et 5, dans lequel l'adoption du comportement de suiveur signifie en outre la transmission de toutes les indications de dernières positions reçues en provenance d'autres suiveurs à l'élément de repérage.

14. Procédé selon les revendications 4, 5 et 6, dans lequel l'adoption de l'élément de repérage de comportement signifie en outre l'enregistrement de toutes les indications de dernières positions fournies par les suiveurs.

15. Procédé selon la revendication 1, dans lequel (S3) l'établissement de moyens de communication se connectant à des entités automatisées atteintes directement à l'aide d'unicast ou de groupcast au moyen d'une communication radio, d'une communication cellulaire ou par satellite, d'une communication de dispositif à dispositif, d'une liaison latérale 5G, d'une communication Wi-Fi directe ou à bande ultra-large (UWB), d'une communication de diffusion au moyen de DSRC, LTE-V2X, NR-V2X, ou d'un géoréseautage, ou indirectement de manière multi-saut.

16. Procédé selon la revendication 1, dans lequel différents groupes d'entités automatisées sont censés atteindre différentes zones de rencontre, tout en maintenant la connexion sous des contraintes d'optimisation de formation d'essaim.

17. Entité automatisée, initialement déployée arbitrairement sur une zone d'opérations, et appelée à former un essaim, l'entité comprenant :
une pluralité de capteurs,
des moyens de communication sans fil, par lesquels l'entité automatisée est apte à se connecter sans fil à au moins une autre entité automatisée parmi la pluralité d'entités automatisées,
une mémoire,
et au moins un processeur couplé à la mémoire, dans lequel l'au moins un processeur est configuré pour exécuter les une ou plusieurs instructions :
d'évaluation d'un rang individuel initial, sur la base de ses propres capacités de communication et de non-communication, et de génération d'une stratégie planifiée individuelle pour atteindre une zone de réunion sous des contraintes d'optimisation individuelles,
de communication des données relatives au rang initial et aux capacités évaluées, en fonction des rangs initiaux et des données de capacités reçues en provenance des entités automatisées ayant répondu, l'établissement de communications avec les entités automatisées ayant répondu et mettre à jour le rang individuel initial et la stratégie planifiée pour atteindre la zone de réunion tout en maintenant la connexion avec les entités automatisées ayant répondu, sous des contraintes d'optimisation de formation d'essaims, et
dans lequel, n'ayant reçu aucune réponse de toute autre entité automatisée parmi la pluralité d'entités automatisées, l'entité automatisée fonctionne de manière autonome selon la stratégie planifiée individuellement.

18. Entité automatisée selon la revendication 17, dans laquelle l'entité automatisée est un véhicule aérien qui possède des capacités de communication sans fil à grande échelle et à zone locale et agit comme relais de communication ou station de base mobile.

19. Essaim d'entités automatisées appelées à effectuer une mission, dans lequel l'essaim comprend des entités automatisées selon les revendications 17 et 18, y compris des combinaisons de celles-ci, dans lequel des entités aériennes sont capables de soutenir des entités terrestres sur une formation d'essaim distribuée.

20. Support lisible par ordinateur pour la formation distribuée d'entités automatisées et le stockage d'instructions exécutables par ordinateur, dans lequel les instructions exécutables par ordinateur, lorsqu'elles sont exécutées, amènent au moins un processeur à exécuter le procédé selon l'une quelconque des revendications 1 à 16.
